(19) Europäisches Patentamt / European Patent Office / Office européen des brevets

(11) **EP 2 128 576 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(51) Int Cl.:
*G01F 23/28* (2006.01)  *G01F 23/284* (2006.01)
*G01F 23/296* (2006.01)

(21) Anmeldenummer: **08156996.4**

(22) Anmeldetag: **27.05.2008**

(54) **Auswertung der Echoform bei Füllstandsensoren**

Evaluation of an echo shape of filling level sensors

Procédé de détection de double parole basé sur les propriétés acoustiques spectrales

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**02.12.2009 Patentblatt 2009/49**

(73) Patentinhaber: **VEGA Grieshaber KG**
**77709 Wolfach (DE)**

(72) Erfinder:
• **FEHRENBACH, Josef**
**77716, Haslach (DE)**
• **DECK, Thomas**
**77709, Wolfach (DE)**
• **WELLE, Roland**
**77709, Oberwolfach (DE)**
• **GRIESSBAUM, Karl**
**77796, Mühlenbach (DE)**

(74) Vertreter: **Maiwald Patentanwalts GmbH**
**Elisenhof**
**Elisenstrasse 3**
**80335 München (DE)**

(56) Entgegenhaltungen:
EP-A- 1 701 142     DE-A1- 3 015 006
DE-A1-102005 011 778     DE-A1-102005 063 079

**Beschreibung**

Gebiet der Erfindung

Die Erfindung betrifft die Füllstandmessung. Insbesondere betrifft die Erfindung einen Laufzeit-Füllstandsensor zur Messung eines Füllstands eines Füllguts in einem Behälter, ein Verfahren zum Bestimmen eines Füllstands eines Füllguts in einem Behälter, ein Programmelement und ein computerlesbares Medium.

Technologischer Hintergrund

Zur kontinuierlichen Füllstandbestimmung in Behältern, die beispielsweise Flüssigkeiten oder Schüttgüter enthalten, werden oftmals Sensoren verwendet, die nach dem Laufzeit-Verfahren die Laufzeit von elektromagnetischen oder akustischen Wellen vom Sensor zur Füllgutoberfläche und zurück messen. Aus dem aus der Signallaufzeit über die Wellenausbreitungsgeschwindigkeit ermittelten Abstand zwischen dem Sensor und der Füllgutoberfläche ist bei bekanntem Montageort des Sensors relativ zum Behälterboden die gesuchte Füllhöhe unmittelbar zu berechnen. Akustische Wellen werden von sog. Ultraschall-Füllstandsensoren überwiegend etwa im Bereich von 10 KHz bis zu 100 KHz mittels elektromechanischer Schallwandler meist in Form kurzer Pulse erzeugt und abgestrahlt. Die reflektierten Schallpulse werden entweder vom gleichen Schallwandler oder einem zweiten, nur für den Empfang vorgesehenen Wandler empfangen und hinsichtlich ihrer Laufzeit bezogen auf den Sendezeitpunkt ausgewertet.

Elektromagnetische Wellen, die in einem Frequenzbereich zwischen etwa 0,5 GHz und 100 GHz liegen können, werden vom Sensor meist über Antennen abgestrahlt und wieder empfangen. Solche Sensoren werden üblicherweise als Radar-Füllstandsensoren bezeichnet. Daneben sind Geräte bekannt, die die Welle entlang eines Wellenleiters vom Sensor zum Füllgut und zurück leiten. Die Reflexion der Wellen an der Füllgutoberfläche beruht auf der Änderung der Ausbreitungsimpedanz für die Welle an dieser Stelle. Diese Geräte werden ebenfalls als Radar- oder häufiger als TDR-Füllstandsensoren (TDR = Time Domain Reflectometry) bezeichnet.

Die Schwierigkeit besteht nun oftmals zum einen darin, die Füllgutreflexion eindeutig von allen anderen Echos zu unterscheiden.

Zum anderen sind die Echos des Füllguts oftmals in ihrer Form nicht so, wie sich eine Reflexion an einer ebenen homogenen Fläche darstellen würde. Daraus entsteht das Problem, aus dem gefundenen Echo der Füllgutoberfläche eine eindeutige Distanz zwischen dem Sensor und dem Füllgut und daraus einen diskreten Wert für den Befüllungsgrad des Behälters anzugeben. Dies gilt weniger für Laufzeitmessungen in Flüssigkeitsbehältern, aber fast immer ergibt sich dieses Problem in Schüttgutanwendungen.

Aus Anwendersicht ist aber oftmals die Angabe des tatsächlichen Befüllungsvolumens von Interesse. Ebenfalls nützlich für den Anwender ist in bestimmten Fällen die Kenntnis der Topographie der Schüttgutoberfläche.

Es wäre wünschenswert, eine räumliche Auflösung einer Radarmessung zu erreichen und diese Auflösung so weit zu verbessern, dass ein dreidimensionales Bild des Reflektors (Schüttgutoberfläche bzw. Füllgutoberfläche) erzeugt werden kann.

Aus der DE 10 2005 011 686 A1 ist ein Verfahren zur Messung des Füllstands eines in einem Behälter vorgesehenen Mediums auf der Grundlage des Radar-Prinzips bekannt, bei dem das Messsignal in eine Mehrzahl von voneinander verschiedenen Bereichen ausgesandt wird und die zurückreflektierten Anteile des Messsignals an einer Mehrzahl von Empfangsstellen empfangen werden. Auf diese Weise soll für bestimmte Auflösungszellen in mehreren Raumrichtungen ein Reflexionsabstand zum Füllgut bestimmt werden. Alle Auflösungszellen zusammen ergeben damit ein Bild der dreidimensionalen Topologie der Oberfläche des Mediums.

Aus der DE 10 2005 011 778 A1 ist ein Verfahren zur Messung des Füllstands eines in einem Behälter vorgesehenen Mediums auf der Grundlage des Radar-Prinzips bekannt, bei dem der zurückreflektierte Anteil des Messsignals phasensensitiv ausgewertet wird, wobei das Radar-Messsignal von verschiedenen Einzelantennen zur Feststellung verschiedener Raumrichtungen erzeugt wird.

Aus der WO 2006/090394 ist es bekannt, durch die Verwendung eines Arrays aus mehreren Schallsendern bzw. Schallempfängern ein dreidimensionales Bild der Füllgutoberfläche zu erzeugen.

Derartige Verfahren zur Ermittlung eines dreidimensionalen Bilds einer Füllgutoberfläche setzen oft einen relativ hohen Aufwand an Mechanik und/oder Elektronik voraus, um die Entfernungsinformationen in verschiedenen Auflösungszellen zu erhalten. Die mechanische Bewegung der Antenne erfordert Stellmotoren, Energie und Wartung. Die Alternative mit Gruppenantennen erfordert einigen Aufwand und Zeit an Signalverarbeitung für die phasensensitive Auswertung der verschiedenen Empfangssignale.

DE 10 2005 063 079 A1 offenbart ein Verfahren zur Ermittlung und Überwachung des Füllstands eines Schüttgutes in einem Behälter, insbesondere die Identifizierung eines Echobandes in einer Echokurve.

Es ist eine Aufgabe der Erfindung, eine vereinfachte Ermittlung der Topographie einer Füllgutoberfläche für einen Laufzeit-Füllstandsensor bereitzustellen.

Die Aufgabe wird durch die Ansprüche 1, 12, 13 und 14 gelöst. Weiterbildungen der Erfindung ergeben sich aus den Unteransprüchen.

Die beschriebenen Ausführungsbeispiele betreffen gleichermaßen den Laufzeit-Füllstandsensor das Verfahren, das Programmelement sowie das computerlesbare Medium.

Gemäß einem Ausführungsbeispiel der Erfindung ist ein Füllstandmessgerät zum Messen eines Füllstands eines Füllguts in einem Behälter angegeben, welches einen Empfänger zum Empfang eines von der Füllgutoberfläche reflektierenden Signals und eine Recheneinheit zum Ermitteln von Informationen über eine Topographie der Füllgutoberfläche auf Basis einer Form des Empfangssignals aufweist.

In anderen Worten werden aus der Form der Reflexion am Füllgut bestimmte Aussagen über die Form der Oberfläche des Füllguts abgeleitet. Dazu eignen sich einzelne Echokurven, die mit Laufzeitsensoren mit einfachen kombinierten Sende- und Empfangsantennen erzeugt werden. Auch eignen sich dazu eine Mehrzahl von Echokurven aus aufwändigeren Messungen in verschiedenen Auflösungszellen.

Es werden nicht einzelne Auflösungszellen hinsichtlich der Reflektorentfernung vermessen, sondern Echoformen (hinsichtlich ihrer Form) in einer oder mehreren Auflösungszellen ausgewertet und daraus Information über die Reflektoroberfläche extrahiert. Aus dieser extrahierten Information kann dann die Aussage darüber getroffen werden, ob gerade ein Schüttkegel, ein Abzugstrichter oder eine annähernd ebene Füllgutoberfläche vorliegt. Weiterhin lässt sich die Höhe eines Schüttkegels oder Abzugstrichters im Füllgut näherungsweise aus der Echoform bestimmen. Bei bekannter Behältergeometrie ermöglicht die Auswertung der Echoform auch eine Aussage über das Füllungsvolumen und bei bekannter Füllgutdichte auch über die Masse des Behälterinhalts.

Bei flüssigen Füllgütern kann über die Echoform auch ein aktueller Kippwinkel des Behälters bestimmt werden. Dies ist insbesondere für Anwendungen in mobilen Behältern oder Transportsilos interessant. Auf diese Weise kann auch bei einer Verkippung des Behälters ein genauer Füllstand berechnet werden, indem der Kippwinkel und die Behältergeometrie in die Füllstandsberechnung miteinbezogen werden. Weiterhin können über die Auswertung/Analyse der Echoform Fehlmessungen identifiziert werden, welche die Messergebnisse ansonsten verfälschen würden. Solche Fehlmessungen können z.B. entstehen, wenn ein Transportsilo um 90° verkippt ist.

Gemäß einem weiteren Ausführungsbeispiel der Erfindung ist das Füllstandmessgerät als Laufzeit-Füllstandsensor ausgeführt. Beispielsweise handelt es sich um einen Ultraschall-Füllstandsensor oder einen Füllstandradar, der sich beispielsweise des Pulsradarverfahrens bedient.

Gemäß einem weiteren Ausführungsbeispiel der Erfindung ist die Recheneinheit zum Ermitteln der Informationen über die Topographie der Füllgutoberfläche auf Basis der Form einer Echokurve des Empfangssignals ausgeführt.

Gemäß einem weiteren Ausführungsbeispiel der Erfindung ist das Füllstandmessgerät ein Füllstandradar, der die Füllstandmessung auf Basis eines Pulsradarverfahrens durchführt, wobei die Recheneinheit zum Ermitteln der Informationen über die Topographie der Füllgutoberfläche auf Basis einer Hüllkurve des Empfangssignals ausgeführt ist.

Gemäß einem weiteren Ausführungsbeispiel der Erfindung ist das Füllstandmessgerät ein Füllstandradar, der die Füllstandmessung auf Basis eines FMCW-Prinzips durchführt, wobei die Recheneinheit zum Ermitteln der Informationen über die Topographie der Füllgutoberfläche auf Basis eines Amplitudenprofils des Empfangssignals ausgeführt ist.

Gemäß einem weiteren Ausführungsbeispiel der Erfindung ist die Recheneinheit zum Ermitteln einer Höhe eines Schüttkegels oder eines Abzugstrichters auf Basis einer Länge des Echobandes in der Füllgutreflexion einer einzelnen Echokurve ausgeführt.

Gemäß einem weiteren Ausführungsbeispiel der Erfindung ist die Recheneinheit zum Ermitteln von Informationen über eine Topographie der Füllgutoberfläche bei einer Nutzung zusätzlicher Informationen über die Messumgebung ausgeführt.

Diese zusätzlichen Informationen können beispielsweise Angaben über den Behälter, das Füllgut und den Einbauort des Sensors enthalten.

Gemäß einem weiteren Ausführungsbeispiel der Erfindung ist eine Speichereinheit zum Speichern der zusätzlichen Informationen vorgesehen, wobei zumindest einige dieser zusätzlichen Informationen manuell durch einen Benutzer eingegeben werden.

Gemäß einem weiteren Ausführungsbeispiel der Erfindung ist die Recheneinheit zum Ermitteln einer Höhe eines Schüttkegels oder eines Abzugstrichters auf Basis mehrerer, zu verschiedenen Zeitpunkten empfangener, aber ansonsten korrespondierender Echokurven ausgeführt.

Gemäß einem weiteren Ausführungsbeispiel der Erfindung ist die Recheneinheit zum Ermitteln der Informationen über die Topographie der Füllgutoberfläche auf Basis mehrerer, zu verschiedenen Zeitpunkten empfangener, aber ansonsten korrespondierender Echokurven der Füllgutoberfläche ausgeführt, wobei die mit den Echokurven korrespondierenden Sendesignale mit jeweils unterschiedlichen Sensorparametern erzeugt sind.

Beispielsweise handelt es sich bei den unterschiedlichen Sensorparametern um die Frequenzen der abgestrahlten Sendesignale und/oder um die Polarisationen der abgestrahlten Sendesignale.

Aus der Veränderung der Echoform bei den verschiedenen Frequenzen ist eine verbesserte Aussage über die Topographie der Füllgutoberfläche möglich.

Gemäß einem weiteren Ausführungsbeispiel der Erfindung sind die mit den Echokurven korrespondierenden Sendesignale mit unterschiedlichen Antennen erzeugt. Auf diese Weise lässt sich die Auflösung zur Darstellung der Topographie der Füllgutoberfläche weiter erhöhen.

Gemäß einem weiteren Ausführungsbeispiel der Erfindung ist ein Verfahren zum Bestimmen eines Füllstands eines Füllguts in einem Behälter angegeben, bei dem ein von der Füllgutoberfläche reflektiertes Empfangssignal empfangen und daraufhin Informationen über eine Topographie der Füllgutoberfläche auf Basis einer Form des Empfangssignals ermittelt werden.

Gemäß einem weiteren Ausführungsbeispiel der Erfindung ist ein Programmelement zum Bestimmen eines Füllstands eines Füllguts in einem Behälter angegeben, das, wenn es auf einem Prozessor ausgeführt wird, den Prozessor anleitet, die oben beschriebenen Verfahrensschritte durchzuführen.

Gemäß einem weiteren Ausführungsbeispiel der Erfindung ist ein computerlesbares Medium zum Bestimmen eines Füllstands eines Füllguts in einem Behälter angegeben, auf dem ein Programmelement gespeichert ist, das, wenn es auf einem Prozessor ausgeführt wird, den Prozessor anleitet, die oben beschriebenen Verfahrensschritte durchzuführen.

Im Folgenden werden mit Verweis auf die Figuren bevorzugte Ausführungsbeispiele der Erfindung beschrieben.

Kurze Beschreibung der Figuren

Fig. 1 zeigt eine schematische Darstellung einer Messumgebung mit einem Füllstandsensor gemäß einem Ausführungsbeispiel der Erfindung.

Fig. 2 zeigt einen prinzipiellen Aufbau eines Laufzeit-Füllstandsensors gemäß einem Ausführungsbeispiel der Erfindung.

Fig. 3 zeigt eine Echokurve eines Laufzeit-Füllstandsensors gemäß einem Ausführungsbeispiel der Erfindung.

Fig. 4a, 4b und 4c zeigen verschiedene Echokurven eines Puls-Radarsensors gemäß einem Ausführungsbeispiel der Erfindung.

Fig. 5a, 5b und 5c zeigen Echokurven zu verschiedenen Zeitpunkten gemäß einem Ausführungsbeispiel der Erfindung.

Fig. 6a, 6b und 6c zeigen eine Messanordnung sowie zwei Echokurven in verschiedenen Auflösungszellen mit unterschiedlich fokussierenden Antennen gemäß einem Ausführungsbeispiel der Erfindung.

Fig. 7a, 7b, 7c und 7d zeigen eine Messanordnung, Ausleuchtzonen innerhalb des Behälters sowie zwei Empfangssignale gemäß einem Ausführungsbeispiel der Erfindung.

Fig. 8 zeigt ein Flussdiagramm eines Verfahrens gemäß einem Ausführungsbeispiel der Erfindung.

Detaillierte Beschreibung von Ausführungsbeispielen

Die Darstellungen in den Figuren sind schematisch und nicht maßstäblich. In der folgenden Figurenbeschreibung werden für die gleichen oder ähnlichen Elemente die gleichen Bezugsziffern verwendet.

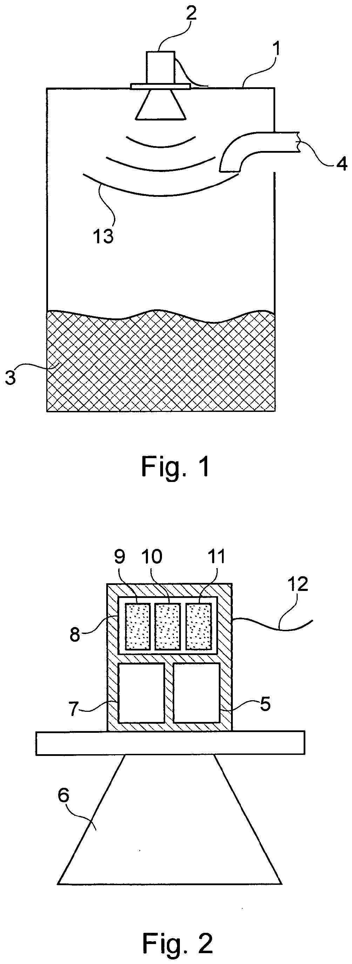

Fig. 1 zeigt eine schematische Darstellung einer Messumgebung mit einem Füllstandsensor gemäß einem Ausführungsbeispiel der Erfindung.

Schüttgüter bilden selten plane, ebene, glatte, sondern meist mehr oder weniger zerklüftete Oberflächen. Durch die Befüllung der Behälter können Schüttkegel entstehen. Eine Behälterentleerung bildet oft Abzugstrichter im Schüttgut. Die dadurch entstehenden Echos von Laufzeitsensoren haben deshalb keine Normechoform, wie sie aus der Reflexion an einer ebenen, lotrecht zur Wellenausbreitungsrichtung liegenden Fläche bekannt ist. Stattdessen sind die Echos der Schüttgutoberfläche als Resultat aus sehr vielen einzelnen Reflexionen deutlich länger und weisen keine einheitliche Form auf, weshalb man in diesem Zusammenhang auch von Echobändern spricht.

Soll aus einem solchen Echoband ein definierter Füllstand für den Behälter abgeleitet werden, so stellt sich die Frage, welche "Höhenlinie" das "Gebirge" der Schüttgutoberfläche am besten repräsentiert. So kann sich ein Füllgutsensor beispielsweise am Beginn des Echobandes orientieren und damit tendenziell die Spitzen der Schüttkegel als Füllstand ausgeben.

Radar-Sensoren können sich unterschiedlicher Funktionsprinzipien bedienen, von denen insbesondere die folgenden beiden in der Füllstandmesstechnik eingesetzt werden können:

Das Pulsradarverfahren bedient sich der Erzeugung kurzer kohärenter Mikrowellenpulse, sogenannter Bursts, und ermittelt die direkte Zeitdauer zwischen Aussendung und Empfang der Pulse. Die zu messenden Zeitabstände sind bei üblichen Messentfernungen im Bereich bis zu einigen Metern äußerst kurz, weshalb bei Pulsradarsensoren das empfangene Echosignal zweckmäßigerweise durch ein Zeittransformationsverfahren zeitlich gedehnt wird.

Es liefert ein gedehntes Echosignal, das dem empfangenen hochfrequenten Sende- und Empfangssignal entspricht, aber zeitlich beispielsweise um einen Faktor zwischen 10 000 und 100 000 langsamer abläuft.

Aus einer Trägerschwingungsfrequenz des Mikrowellenpulses von beispielsweise 5,8 GHz wird eine Trägerschwingungsfrequenz des zeitgedehnten Echopulses zwischen beispielsweise 58 kHz und 580 kHz. Dieses intern durch die Zeittransformation entstandene Signal wird allgemein auch als Zwischenfrequenzsignal oder kurz ZF-Signal bezeichnet und liegt üblicherweise etwa zwischen 10kHz und 1 MHz, beispielsweise zwischen 50kHz und 200kHz. Dieses ZF-Signal ist wie erwähnt ein zeitgedehntes Abbild des zeitlichen Verlaufs der gesendeten und empfangenen Mikrowellenpulse. Sowohl vom Frequenzbereich als auch dem Charakter des Amplitudenverlaufs ähneln sich ZF-Signal des Pulsradarverfahrens und Echosignal des Ultraschallverfahrens sehr stark, weshalb die weitere Verarbeitung und Auswertung dieser Signale zur Ermittlung der relevanten Echolaufzeit und damit Messentfernung bis auf geringe Unterschiede gleich ist. Über beispielsweise eine Zweiweggleichrichtung und Filterung des ZF-Signals bzw. des Ultraschall-Echosignals lässt sich eine Hüllkurve erzeugen. Diese ist interpretierbar als Reflexionsprofil des Füllgutbehälters aufgetragen über der Laufzeit bzw. der Entfernung. Es dient nach entsprechender Digitalisierung als Grundlage für die Bestimmung der Füllgutreflexion und der zugehörigen gesuchten Laufzeit.

Ein zweites wichtiges Radar-Verfahren ist das Verfahren nach dem FMCW-Prinzip (FMCW = Frequency modulated continuous wave). Es beruht auf der Aussendung eines kontinuierlichen, in der Frequenz linear sich ändernden Mikrowellensignals, welches nach der Laufzeit zum Reflektor und zurück wieder am Sensor eintrifft. Aus gesendetem und empfangenem Signal wird deren Differenzfrequenz-Signal gebildet, dessen Frequenz direkt proportional der gesuchten Laufzeit ist. Um bei Vorhandensein mehrerer Reflektoren Informationen über Entfernung und Amplitude aller Echos zu erhalten, wird das im Zeitbereich gebildete Differenzfrequenz-Signal meist einer Transformation in den Frequenzbereich unterzogen. Bevorzugtes Hilfsmittel ist hier die FFT (Fast Fourier Transformation). Ergebnis der Transformation ist ein Amplitudenprofil, welches über der Frequenz aufgetragen ist und damit gleichzeitig das Reflexionsprofil über der Laufzeit oder Entfernung darstellt. Damit ist es direkt vergleichbar mit der Hüllkurve der Puls-LaufzeitSensoren.

Somit ist allen hier betrachteten Laufzeit-Füllstandsensoren die Bildung und Auswertung eines Reflexionsprofils in Form eines Verlaufs der Reflexionsamplitude, aufgetragen über der Entfernung, gemeinsam. Dieses Reflexionsprofil, oft auch als Echofunktion oder Echokurve bezeichnet, enthält meist aber nicht nur das Echo vom Füllgut, sondern weitere Echos beispielsweise von Behältereinbauten, Wänden, dem Behälterboden oder mehrfachen Reflexionen vom Füllgut.

Die Schwierigkeit besteht nun oftmals zum einen darin, die Füllgutreflexion eindeutig von allen anderen Echos zu unterscheiden. Beispielsweise können aus Reflexionsprofilen bzw. Echokurven Echolisten mit mehreren Echos und deren Verwandtschaftsbeziehungen untereinander gebildet werden, durch Trackingeinrichtungen den aktuellen Echos Historie zugeordnet werden und mit Hilfe dieser Informationen die Entscheidung getroffen werden, an welcher Stelle der Echofunktion das Echo der Füllgutoberfläche liegt.

Für einen Radarsensor mit feststehender Antenne lässt sich eine dreidimensionale Auflösungszelle definieren, innerhalb derer sich einzelne Reflektoren durch die Auswertung des Radar-Messsignals nicht mehr unterscheiden lassen.

Es gilt näherungsweise, dass eine räumliche Ausdehnung der Auflösungszelle in einer bestimmten Raumrichtung senkrecht zur Wellenausbreitungsrichtung proportional zur Wellenlänge und zur Reflektorentfernung bzw. Entfernung der Auflösungszelle und umgekehrt proportional zur Antennenapertur (also der wirksamen Antennenfläche) in dieser Raumrichtung ist. In Richtung der Wellenausbreitung ist die Tiefe der Auflösungszelle bekanntlich abhängig von der verwendeten Messbandbreite. Die räumliche Lage der Auflösungszelle ist gekennzeichnet durch den Raumwinkel relativ zur Antenne.

Eine Verbesserung der räumlichen Auflösung durch Verkleinerung der Auflösungszelle lässt sich demnach bei festgelegter Entfernung von der Antenne durch Reduzierung der Wellenlänge, Vergrößerung der Antennenapertur und Vergrößerung der Messbandbreite erreichen. Dieser Schritt zu möglichst kleiner Auflösungszelle ist zwar Voraussetzung für das Ziel einer möglichst detaillierten Erfassung der räumlichen Struktur des reflektierenden Objekts, aber für sich allein nicht ausreichend. Zusätzlich notwendig ist die Messung in mehreren verschiedenen Auflösungszellen, deren Ergebnisse erst in Kombination Aufschluss über die Topografie der Reflektoroberfläche ergeben. Sind die Auflösungszellen kleiner als der beleuchtete Reflektor, spricht man in der Radartechnik von Mikrowellenabbildung. Die Qualität dieser Abbildung ist charakterisiert durch das Verhältnis von Auflösungszelle zu Reflektor-Objektgröße. Information zu den verschiedenen Aspekten der Mikrowellenabbildung finden sich im Buch Radartechnik, Springer-Verlag, 1989, Jürgen Detlefsen und im Buch Radar Handbook, Second Edition, McGraw-Hill, 1990, Merrill Skolnik. Die dort beschriebenen Verfahren der allgemeinen Radartechnik zur Erzeugung dreidimensionaler Abbildungen von Reflektoren lassen sich prinzipiell auch für die Füllstandmesstechnik verwenden.

Um in mehreren verschiedenen Auflösungszellen eine Messung durchführen zu können, können eine Reihe von Maßnahmen zur Modifizierung bekannter Radarsensoren mit feststehender Antenne vorgenommen werden. Alle Maßnahmen laufen in irgendeiner Weise darauf hinaus, den Raumwinkel der Wellenausbreitungsrichtung der Sende- und bzw. oder Empfangswelle zu variieren, um Entfernungsinformation in verschiedenen Auflösungszellen zu erhalten.

In einem Fall bedeutet dies, dass die Antenne mechanisch in verschiedene Positionen bewegt wird, um in jeder Position eine bestimmte Auflösungszelle zu vermessen. Bei kombinierter Sende- und Empfangsantenne gilt die Positionsveränderung natürlich gleichzeitig für Sende- und Empfangsfall. Bei getrennten Sende- und Empfangsantennen können die Positionen anstatt gemeinsam selbstverständlich auch getrennt verändert werden. Diese von Scannern bekannte Vorgehensweise der Positionsveränderung kann beispielsweise zeilenweise, kreisförmig oder spiralförmig in einer Ebene durchgeführt werden, lässt sich aber auch in beliebiger Weise über einen ganzen Raum ausdehnen.

Diese Vorgehensweise ist eng verwandt zum in der Radartechnik bekannten SAR-Verfahren (SAR: synthetic aperture radar). Bei diesem werden die Empfangssignale einer linear bewegten Antenne mit einem senkrecht zur Bewegungsrichtung ausgerichteten Radarstrahl in einer geeigneten Signalaufbereitung so ausgewertet, dass die Auflösung in Bewegungsrichtung theoretisch bis auf einen Unschärfebereich in der Größenordnung der Apertur der verwendeten Antenne gesteigert werden kann. Alternativ zur Positionsveränderung ist eine mechanische Drehung der Antenne um eine beliebige Achse am gleichen Ort ebenso dazu geeignet, verschiedene Auflösungszellen zu untersuchen.

Statt einer mechanischen Bewegung der Antenne kann deren Abstrahlrichtung auch elektronisch variiert werden. Besonders hierfür geeignet sind Gruppenantennen, die aus mehreren Einzelstrahlern bestehen. Durch Überlagerung der einzelnen Empfangssignale unter Beachtung der Phasenlage lässt sich je nach Einstellung der gegenseitigen Phasenverschiebung die Strahlungsrichtung der Gesamtantenne einstellen.

Eng verwandt zum Prinzip der Verwendung von Gruppenantennen sind Sensoren, die sich in ganz allgemeiner Form mehrerer auf verschiedenen Positionen verteilten Antennen bedienen. Durch Ausnutzung möglichst vieler Kombinationen von sendenden und empfangenden Einzelantennen lassen sich sehr viele verschiedene Auflösungszellen untersuchen. Deren Ergebnisse zusammen ergeben entsprechend ausgewertet ein mehr oder weniger gut aufgelöstes dreidimensionales Bild der Reflektoroberfläche.

Gemäß einem Ausführungsbeispiel der Erfindung wird anhand einer einzelnen Echokurve aus der Länge des Echobandes der Füllgutreflexion direkt die Höhe des Schüttkegels bzw. Abzugstrichters bestimmt. Weiterhin kann aus einem Vergleich der Echoamplituden an verschiedenen Stellen innerhalb des Echobandes der Füllgutoberfläche eine Entscheidung darüber getroffen werden, ob ein Schüttkegel, ein Abzugstrichter oder eine unregelmäßig gestaltete Oberfläche des Füllguts vorliegt. Aus diesen dann vorliegenden Informationen lässt sich zum einen ein guter Näherungswert für das Befüllungsvolumen bzw. bei bekannter Füllgutdichte auch der Füllgutmasse ermitteln, und es können außerdem Daten für eine schematische Visualisierung der Füllgutoberfläche z.B. in einem Prozessleitsystem generiert werden.

Verbessern lässt sich die Zuverlässigkeit und Genauigkeit der beschriebenen Messergebnisse dadurch, dass dem Laufzeitsensor zusätzliche Informationen über die Messumgebung mitgeteilt werden. Dies kann z.B. durch eine anwenderseitige Parametrierung des Sensors oder eine werksseitige Voreinstellung nach Kundenangaben erfolgen. Diese zusätzlichen Informationen können beispielsweise Angaben über den Behälter, das Füllgut und den Einbauort des Sensors sein. Es sind hier unter anderem Behälterform, Behältergröße, Art und Position der Befüllung, Art und Position der Entleerung, Montageort des Füllstandsensors, Ausrichtung des Sensors, Art, Körnung und DK-Wert des Füllguts von Interesse.

In einem weiteren Ausführungsbeispiel der Erfindung werden anhand mehrerer, zu verschiedenen Zeitpunkten registrierter, aber ansonsten gleicher Echokurven Zusatzinformationen gewonnen, die die oben beschriebenen Aussagen über Schüttkegel, Abzugstrichter, deren Höhe und das Befüllungsvolumen erleichtern. Als Zusatzinformation aus mehreren Echokurven lässt sich z.B. die Bewegung und Bewegungsrichtung des Füllguts bestimmen. Eine Füllgutbewegung in Richtung Behälterdecke lässt auf eine Befüllung und eine erhöhte Wahrscheinlichkeit für einen Schüttkegel schließen. Umgekehrt ist bei einer sich vom Sensor entfernenden Reflektoroberfläche die Entstehung eines Abzugstrichters anzunehmen. Eine weitere Möglichkeit, Zusatzinformationen zu gewinnen, ist die manuelle Eingabe von Hilfen zu bestimmten Befüllungszuständen, die vom Sensor gespeichert werden. So kann z.B. während eines einmaligen Befüllungs- und Entleerungszyklus zu bestimmten Zeitpunkten eine Eingabe über die Form der Füllgutoberfläche und das Füllvolumen vorgenommen werden. Der Sensor speichert sich jeweils zu dieser Eingabe die Form der Echos der vorliegenden Echokurve. Daraus entsteht ein Datensatz von eingegebenen Informationen und zugehörigen Echokurven bzw. Echoformen. Im weiteren Verlauf der Füllstandmessung kann der Sensor dann auf diesen Datensatz zugreifen und über einen Vergleich der aktuell vorliegender Echokurve mit gespeicherten Echokurven die Kurve der besten Übereinstimmung finden. Die dazu zugehörigen Informationen treffen dann je nach Grad der Übereinstimmung auch auf die aktuelle Füllstandsituation zu.

In einem weiteren Ausführungsbeispiel der Erfindung erfolgt die Auswertung der Echoform der Füllgutoberfläche an mehreren Echokurven. Die Echokurven werden dabei mit veränderten Sensorparametern erzeugt. So ist es beispielsweise denkbar, die Frequenz der abgestrahlten und wieder empfangenen Welle zu variieren. Bei Verwendung der gleichen Antenne wird so der Abstrahlwinkel variiert und es werden verschiedene Auflösungszellen beleuchtet. Aus der Veränderung der Echoform bei den verschiedenen Frequenzen ist eine verbesserte Aussage über die Topografie der Füllgutoberfläche möglich.

Ähnliches gilt für die Verwendung mehrerer Antennen. Hier bietet sich z.B. die Verwendung von zwei Antennen, einer relativ gut bündelnden Antenne und einer Antenne mit breiterem Abstrahlwinkel, an. Die Antenne mit breitem Abstrahlwinkel lässt sich sehr gut für die Bestimmung der Höhe der Schüttlage verwenden, während die eng bündelnde Antenne sehr gut die Entscheidung darüber ermöglicht, ob ein Schüttkegel oder ein Abzugstrichter vorliegt.

Auch Antennen mit elliptischer Ausleuchtzone, deren Hauptachsen gegeneinander beispielsweise um 90° verdreht sind, lassen sich in dieser Weise vorteilhaft auswerten.

Ebenso kann es für bestimmte Anwendungen von Vorteil sein, die Polarisation der gesendeten Welle beispielsweise um 90° zu drehen oder zwischen linearer und elliptischer bzw. zirkularer Polarisation zu wechseln. So kann die Reflexion der Welle an einer sich nicht im rechten Winkel zur Ausbreitungsrichtung befindlichen Fläche unterschiedliche Echoformen erzeugen, je nachdem mit welcher Polarisationsrichtung die Welle relativ zur Neigung der Fläche auftrifft. Ebenso können sich unterschiedliche Echoformen ergeben in Abhängigkeit davon, ob die Welle linear oder zirkular polarisiert ist. Bei Messungen mit verschiedenen Polarisationen lässt sich demnach aus einem Vergleich der Echoformen zusätzliche Erkenntnis über die Füllgutoberfläche gewinnen.

Fig. 1 zeigt einen typischen Anwendungsfall für den Einsatz des erfindungsgemäßen Verfahrens. Das im Deckenbereich eines Behälters 1 montierte und nach dem Laufzeitverfahren arbeitende Füllstandmessgerät 2 sendet Signale in Richtung des zu messenden Mediums 3 aus. Die abgestrahlten Wellen 13 werden sowohl von dem zu messenden Medium 3 und je nach Messumgebung auch von Behältereinbauten 4 reflektiert und von dem Füllstandmessgerät 2 wieder empfangen. Das Füllstandmessgerät 2 selbst besteht wiederum aus mehreren einzelnen Komponenten, die im Zusammenspiel eine für die Umsetzung des erfindungsgemäßen Verfahrens geeignete Vorrichtung darstellen.

Die Fig. 2 zeigt den prinzipiellen Aufbau eines Laufzeit-Füllstandsensors 2, mit dem das erfindungsgemäße Verfahren durchgeführt werden kann. Von einer Sendeeinrichtung 5 erzeugte Ultraschall- oder Hochfrequenzsignale werden über einen Schallwandler oder die Antenne 6 des Füllstandmessgerätes 2 als Welle in Richtung des zu messenden Mediums 3 abgestrahlt. Die von dem Medium 3 und gegebenenfalls sonstigen Einrichtungen 4 reflektierten Wellenanteile werden vom Schallwandler oder der Antenne 6 nach einer entfernungsabhängigen Laufzeit wieder empfangen, in elektrische Signale gewandelt und an eine Empfangs- und Verarbeitungseinheit 7 weitergeleitet. Innerhalb der Empfangs- und Verarbeitungseinheit 7 werden die Signale gegebenenfalls in der Frequenz umgesetzt und anschließend in bekannter Weise verstärkt, gefiltert, gegebenenfalls demoduliert, logarithmiert und mit Hilfe eines Analog-Digital-Wandlers in die binäre Darstellung transformiert.

Das so erhaltene, digitalisierte Empfangssignal wird anschließend in einem flüchtigen Speicher 9 der Auswerteeinheit 8 abgelegt. Im Fall von Puls-LaufzeitSensoren repräsentiert diese Folge von Digitalwerten die Reflexionsamplitude über der Entfernung, kurz Echokurve genannt. Bei FMCW-Radarsensoren ist eine zusätzliche Transformation der Abtastwerte in Form einer schnellen FourierTransformation (FFT) notwendig, um zu einer vergleichbaren Echokurve zu gelangen. Die Auswerteeinheit 8 (auch Recheneinheit genannt) analysiert die übergebene Echokurve und ermittelt daraus Information über die aktuelle Position und Form der Oberfläche des zu messenden Mediums 3. Hierzu umfasst die Auswerteeinheit 8 neben dem flüchtigen Speicher 9 eine nichtflüchtige Speichereinheit 10 zur Speicherung der Verarbeitungsvorschrift sowie eine Prozessoreinheit 11 zur Durchführung des Verfahrens. Als Ergebnis der Analyse ergibt sich mit Kenntnis bestimmter Behälterdaten zum Schluss ein Befüllungsgrad und bzw. oder -volumen und bzw. oder der Füllgutmasse des Behälters. Als weiteres Ergebnis ist ein dreidimensionales Bild der Füllgutoberfläche möglich. Alle Messergebnisse können dann direkt an einem Display des Sensors dargestellt werden und bzw. oder mit Hilfe einer Kommunikationsverbindung 12, wie beispielsweise einer 4 - 20 mA Leitung mit überlagerter digitaler Signalübertragung, einer übergeordneten Steuerung zur Verfügung gestellt werden.

Ausgangspunkt der von der Auswerteeinheit 8 durchzuführenden erfindungsgemäßen Analyse ist die von der Empfangs- und Verarbeitungseinheit 7 zur Verfügung gestellte digitalisierte Echokurve.

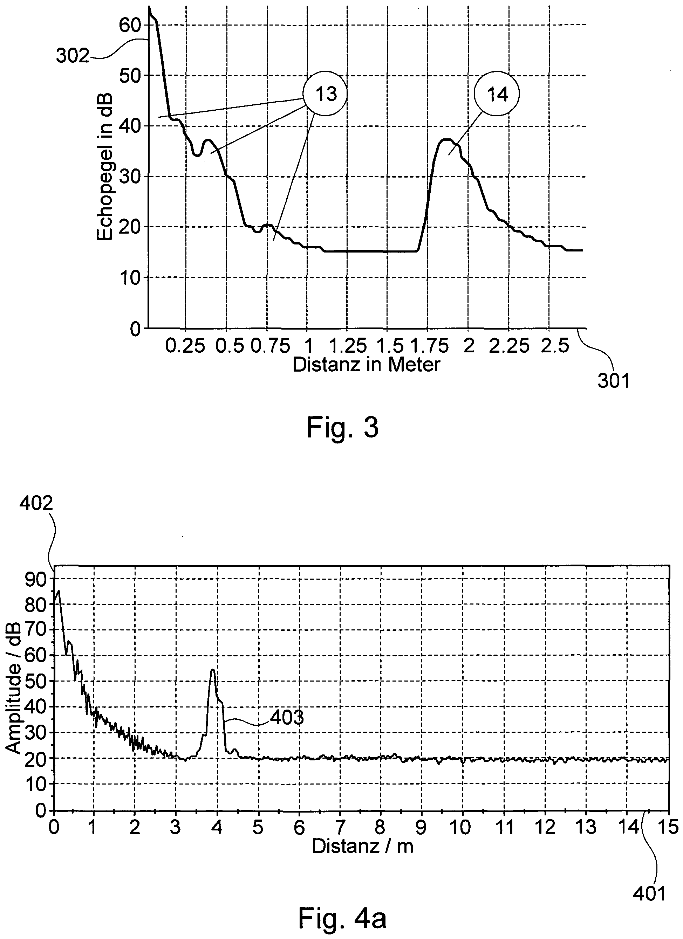

Die Fig. 3 zeigt ein Beispiel einer solchen digitalisierten Echohüllkurve eines Puls-Radarsensors, wie sie bei einer Anwendung gemäß der Fig. 1 entsteht. Dargestellt ist die Echoamplitude 302 in dB als logarithmischer Wert aufgetragen über der Entfernung zum Sensor 301 in Metern.

Wie der Fig. 3 entnommen werden kann, weist die dargestellte Echokurve ein visuell deutlich erkennbares Echo 14 auf. Es liegt in einer Entfernung von etwa 1,80 m und entsteht durch Reflexion an der Oberfläche des Füllguts 3. Das Echogebilde 13 im Nahbereich setzt sich aus mehreren Reflexionen zusammen, die von der Sendeeinrichtung selbst, internen Reflexionen im Hochfrequenz-Elektronikteil und durch die Reflexion des abgestrahlten Impulses an der in der Fig. 1 dargestellten Rohrleitung 4 verursacht werden. Dieses Echo wird unter Anwendung bekannter Verfahren zur Störechoausblendung von der Auswerteeinheit 8 als Störecho erkannt und für die Auswertung der Information zur Füllgutoberfläche nicht weiter berücksichtigt.

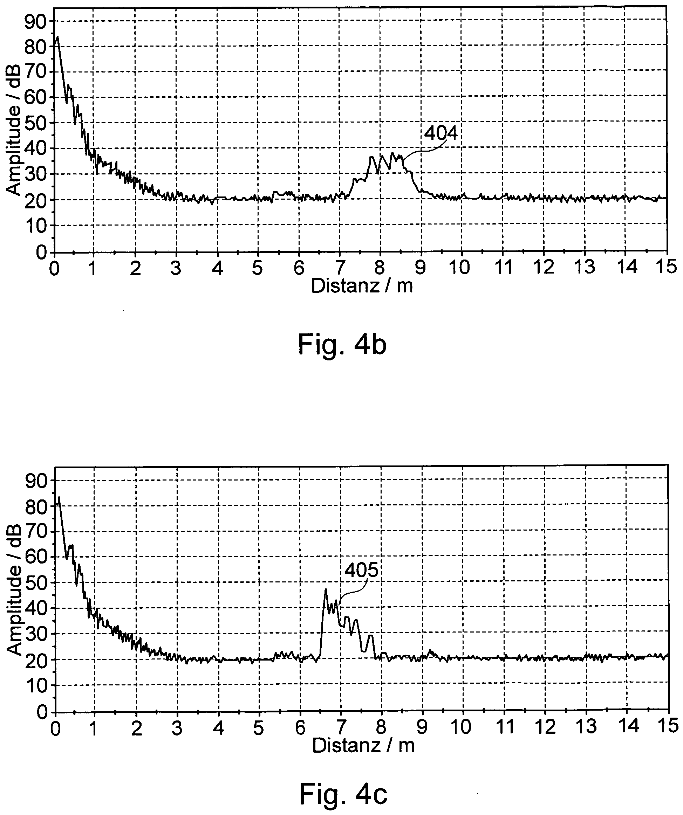

Fig. 4a, 4b und 4c zeigen verschiedene Echokurven eines Puls-Radarsensors, der auf einem mit Sand befüllten Behälter montiert ist. Die Hochachse 402 bezeichnet wieder die Amplitude, die in diesem Beispiel Werte zwischen etwa 20 dB und 85 dB annimmt. Die Querachse 401 bezeichnet wieder die Distanz zum Füllgut in Metern.

Die Kurve in Fig. 4a zeigt bei ca. 4m Messentfernung ein relativ kurzes Echo 403 der Füllgutoberfläche. Im Vergleich dazu sind die Echos 404, 405 der Füllgutoberfläche in Fig. 4b und 4c deutlich länger. Erfindungsgemäß lässt sich aus der Echoform nun folgende Information über die Füllgutoberfläche ermitteln:

Die Länge der Echos deutet direkt auf die Höhe der Schüttlage. Für die Echos aus Fig. 4b und 4c kann also eine Höhendifferenz zwischen niedrigsten und höchsten Oberflächenanteilen von etwa 1,5m abgelesen werden. In Fig. 4a beträgt die Echolänge etwa 0,5m. Berücksichtigt man, dass ein ideales Echo einer planen Oberfläche für den vorliegenden Sensor etwa 0,3m breit ist, so ist aus dieser Echoform ableitbar, dass die Füllgutoberfläche im Fall der Fig. 4a nur wenig Unebenheit aufweist.

Neben der Höhe der Schüttlage kann aus der Echoform weiterhin darauf geschlossen werden, ob die Oberfläche eher einen Schüttkegel einer zuvor erfolgten Befüllung oder einen Abzugstrichter einer Füllgutentnahme aufweist. So lässt sich aus dem Echoband in Fig. 4b erkennen, dass die Amplitude zwischen ca. 7m und 9m Entfernung tendenziell eher ansteigt. In Fig. 4c dagegen ist die Echoamplitude am Echobeginn maximal und nimmt im weiteren Verlauf tendenziell ab. Eine vom Beginn zum Ende des Echos ansteigende Amplitude ist im Allgemeinen auf einen Abzugstrichter in der Füllgutoberfläche zurückzuführen, während im umgekehrten Fall ein Schüttkegel vorliegt. Dies lässt sich damit erklären, dass die bezüglich ihrer Amplitude großen Reflexionsanteile aus dem Bereich des Reflektors stammen, der direkt in der Achse der Hauptausbreitungsrichtung der Antenne liegt. Füllstandsensoren sind meistens so montiert, dass die Hauptausbreitungsrichtung zur Behältermitte hin zeigt. Die Anteile der Füllgutoberfläche in der Nähe zu den Behälterwänden erzeugen demgegenüber kleinere Reflexionsamplituden. Daraus folgt nun, dass innerhalb eines Echobandes die Anteile mit großer Amplitude aus der Hauptstrahlrichtung der Antenne, also im Normalfall aus der Behältermitte, stammen, während die Anteile mit kleiner Amplitude den Randbereichen der Oberfläche zuzuordnen sind. Aus der Echoentfernung, die für die großen Echoanteile abzulesen ist, ergibt sich somit die Füllhöhe in der Mitte des Behälters, während die Echoentfernung von kleinen Reflexionen die Position der Oberfläche in den Randbereichen angibt. Für das Beispiel aus Fig. 4b bedeutet das, dass die Füllgutoberfläche in Behältermitte etwa 8,5m vom Sensor entfernt ist, während die Randbereiche in einer Entfernung von nur etwa 7,2m liegen. Im Gegensatz dazu ist aus dem Echoband aus Fig. 4c für die Behältermitte eine Füllgutentfernung von etwa 6,5m und für die Randbereiche eine Entfernung von etwa 8m bestimmbar. Aus diesen Informationen lässt sich ein grobes Bild einer Füllgutoberfläche für den jeweiligen Fall konstruieren, welches den Behälter im einfachsten Fall unterteilt in Mitten- und Randbereiche mit den oben angegebenen Entfernungen und kontinuierlichen Übergängen dazwischen.

Weiterhin ist es nun bei zumindest grober Kenntnis der Topografie der Füllgutoberfläche möglich, einen Füllstand für den Fall anzugeben, dass die Füllgutoberfläche durch Glättung aller Unebenheiten bei unverändertem Behälterinhalt völlig plan wäre. Daraus leitet sich bei bekannter Behältergeometrie in einfacher Weise ein Volumen des im Behälter befindlichen Füllguts ab. Im einfachsten Fall geschieht dies dadurch, dass von einem idealen Schüttkegel bzw. Abzugstrichter mit der vorbestimmten Höhe h und einer Grundfläche entsprechend der Behälter-Querschnittsfläche ausgegangen wird. Das Volumen eines Kegels errechnet sich aus der Grundfläche multipliziert mit der Höhe dividiert durch 3. Für den Fall eines Schüttkegels liegt dieser gesuchte Füllstand in einer Entfernung, die sich aus der Entfernung der Kegelspitze plus 2/3 mal der Kegelhöhe errechnet. Für den Fall eines kegelförmigen Abzugstrichters ist von der Entfernung der tiefsten Stelle des Trichters 2/3 mal die Trichterhöhe zu subtrahieren. Dies ist gleichbedeutend mit der Addition von 1/3 mal der Höhe zur Entfernung der höchsten Stelle des Trichters.

Die Entscheidung, ob ein Trichter oder ein Kegel vorliegt, wird wie schon angedeutet aus der Echoform in der Weise abgeleitet, dass die Lage des Maximums innerhalb des Echobandes der Schüttgutoberfläche verglichen wird mit der Lage des Echoanfangs A und des Echoendes E. Liegt das Maximum näher beim Anfang als beim Ende, wird von einem Schüttkegel ausgegangen, umgekehrt von einem Trichter. Die Höhe h ergibt sich aus der Länge des Echobandes, d. h. der Entfernung zwischen Echoanfang A und Echoende E. Durch die Einführung eines Formfaktors f, der die Echoform durch einen Zahlenwert zwischen 0 und 1 charakterisiert, lässt sich eine einfache mathematische Bestimmung des das Füllvolumen repräsentierenden Entfernungswerts s vom Sensor zur Füllgutoberfläche angeben:

$$s = A + \frac{1}{3} * h * (1 + f)$$

wobei

s = Entfernung zwischen dem Sensor und einer angenommenen planen Füllgutoberfläche;

A = Entfernung zwischen Sensor und Anfang des Echobandes vom Füllgut;

h = Höhe der Füllgutoberfläche, bestimmt aus der Länge des Echobandes, d.h. der Abstand zwischen dem Echoanfang und dem Echoende; und

f= Formfaktor für das Echoband. Er besitzt den Wert 1 für einen Schüttkegel und den Wert 0 für einen Abzugstrichter. Der Wert 0,5 charakterisiert eine plane Oberfläche.

Statt den Formfaktor f nur mit den Extremwerten 0 und 1 und eventuell einem Zwischenwert 0,5 zu bestimmen, kann es von Vorteil sein, den Formfaktor als kontinuierlichen Wert zwischen 0 und 1 anzugeben. Dies kann in einfacher Weise dadurch geschehen, dass die relative Lage des Maximums innerhalb des Echobandes bestimmt wird. Dazu wird beispielsweise die Differenz zwischen der Entfernung des Endes des Echobands und der Entfernung des Maximums dividiert durch die Länge h des Echobands. Bei einem Schüttkegel ergeben sich dadurch Werte nahe 1 während bei einem Abzugstrichter der Wert dieses Formfaktors nahe 0 liegt.

Eine andere Möglichkeit zur Bestimmung des Formfaktors geht von der Bestimmung des Flächenschwerpunktes der Echokurve des Echobands aus. Die relative Lage des Schwerpunkts innerhalb des Echos der Füllgutoberfläche führt zum Formfaktor in der Art, dass die Differenz zwischen dem Echoende und dem Entfernungswert des Schwerpunkts dividiert durch die Echolänge h wiederum den gewünschten Wert zwischen 0 und 1 ergibt.

Eine dritte Methode zur Bestimmung des Formfaktors basiert auf einem Flächenvergleich unter der Echokurve innerhalb des Echobands des Schüttguts. Verglichen wird die Fläche der ersten Hälfte mit der Fläche des gesamten Echobands. Mathematisch kann dies durch Bildung der Summe der Hüllkurvenwerte zwischen Echoanfang und Echomitte einerseits und Summierung der Werte zwischen Echoanfang und Echoende andererseits geschehen. Das Verhältnis beider Summen ergibt direkt den Formfaktor f.

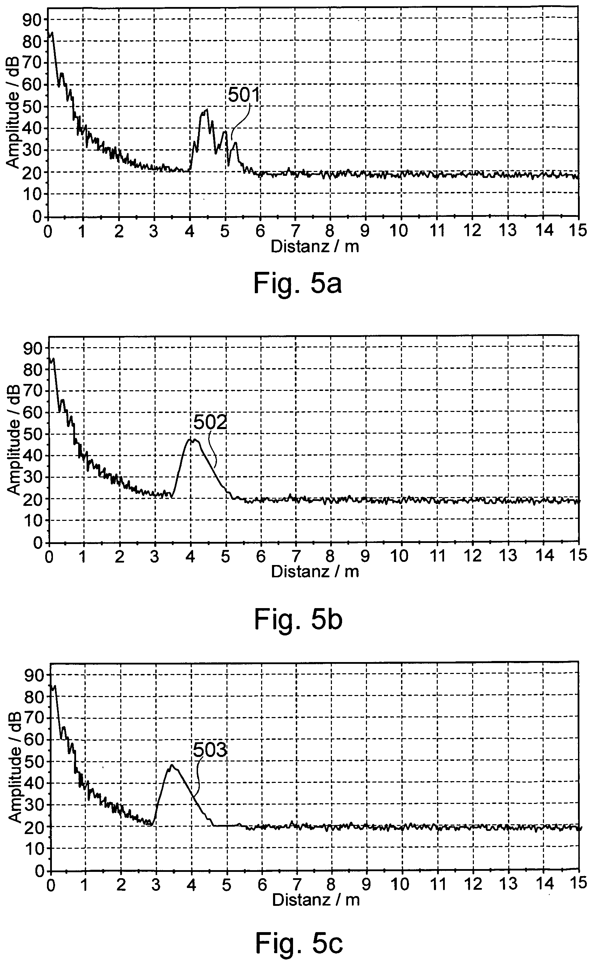

Ein Beispiel, wie aus mehreren Echokurven, die zu verschiedenen Zeitpunkten ohne Veränderung von Sensorparametern gewonnen wurden, weitere Information über die Füllgutoberfläche abzuleiten ist, zeigen die Fig. 5a bis 5c.

Die Echokurve 503 aus Fig. 5c wurde wenige Minuten nach der Kurve 502 aus Fig. 5b, diese wiederum wenige Minuten nach der Kurve 501 aus Fig. 5a aufgenommen.

Das Echo des Füllguts wandert in diesem Beobachtungszeitraum aus einer Entfernung von ca. 4,5m in eine Entfernung von ca. 3,5m. Diese detektierte Bewegung der Füllgutoberfläche in Richtung Sensor lässt eindeutig auf eine Behälterbefüllung schließen. Daraus wiederum ist entsprechend der Distanz der Bewegung die Bildung eines mehr oder weniger hohen Schüttkegels abzuleiten. Sind weitere Umgebungsbedingungen wie Art des Füllguts, Art und Position der Befüllung sowie Behältergeometrie bekannt, so ist sehr gut die Topografie der Füllgutoberfläche zu rekonstruieren.

Umgekehrt kann natürlich auch bei einer Detektion einer Füllgutbewegung vom Sensor weg eine Entleerung und die Entstehung eines Abzugstrichters angenommen werden.

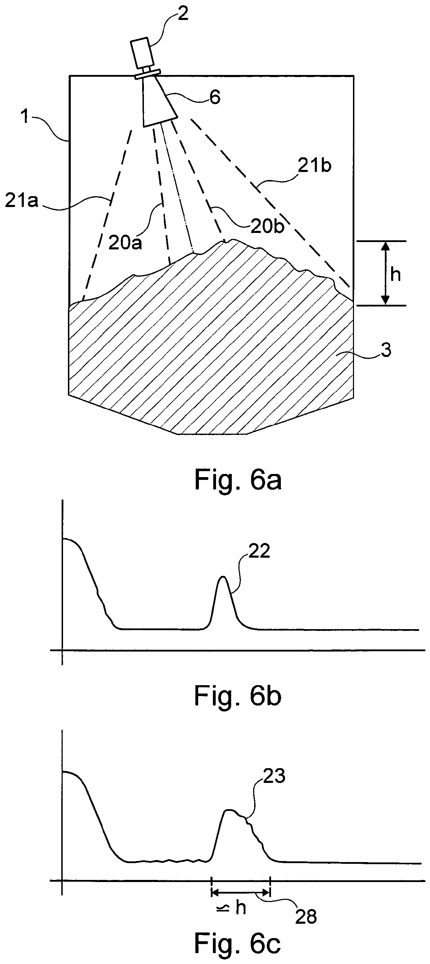

In den Fig. 6a, 6b und 6c ist ein Beispiel dargestellt, wie aus der Messung von Echokurven aus verschiedenen Auflösungszellen und der darauf folgenden Auswertung der Echoformen eine Aussage über die Form der Füllgutoberfläche möglich ist.

Fig. 6a zeigt analog zu Fig. 1 schematisch einen Behälter 1 mit Füllgut 3 und einen von der Behälterdecke aus messenden Laufzeitsensor 2, dessen Antenne 6 in Richtung Behältermitte ausgerichtet ist. Der Abstrahlwinkel des Sensors 2 ist veränderbar, z.B. entweder über eine Änderung der Antennenparameter oder eine Variierung der Sendefrequenz.

Die gestrichelten Linien 20a und 20b deuten den 3dB-Abstrahlwinkel einer scharf bündelnden Antenne an, während die gestrichelten Linien 21a und 21b den Abstrahlwinkel einer weniger stark fokussierenden Antenne markieren. Die Echokurve in Fig. 6b stammt aus einer ersten Messung mit der enger bündelnden Antenne und enthält hauptsächlich Reflexionen 22 aus der Behältermitte. Die Echokurve in Fig. 6c dagegen stammt aus einer zweiten Messung mit der schlechter fokussierenden Antenne und enthält Reflexionen 23 von der gesamten Füllgutoberfläche. Aus der Echokurve in Fig. 6b ist demnach die Füllhöhe in Behältermitte bestimmbar, während aus der Echokurve in Fig. 6c die Höhe h der Schüttlage ermittelt werden kann. Diese Höhe h entspricht näherungsweise der Länge des Pfeils 28.

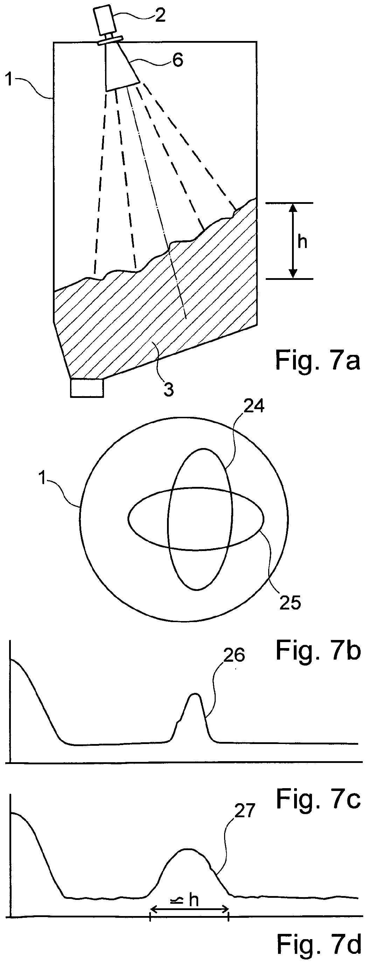

Ein ähnliches Beispiel ist in den Fig. 7a bis 7d gezeigt. Im Unterschied zu Fig. 6 kann hier die Antenne in der Art verändert werden, dass zwei verschiedene elliptische Ausleuchtzonen in zwei zueinander senkrecht stehenden Achsen einstellbar sind. Die Ausleuchtzonen innerhalb des Behälters 1 sind in der Schnittzeichnung Fig. 7b als Ellipsen 24 und 25 dargestellt. Eine erste Messung mit einer Ausleuchtzone gemäß Ellipse 24 führt bei der Schüttlage gemäß Fig. 7a zu einem in Fig. 7c skizzierten relativ schmalen Echo 26, während in einer zweiten Messung mit Ausleuchtzone 25 eine Echokurve gemäß Fig. 7d mit einem breiteren Echo 27 entsteht. Aus den beiden Echoformen lässt sich nun die Höhe der Schüttlage und die räumliche Orientierung der Reflexionsebene abschätzen. Bei einem kurzen in der ersten und einem längeren Echo in der zweiten Messung liegt eine Schüttlage vor, deren Ebene um eine Achse geneigt ist, die etwa der längeren Achse der Ellipse der Ausleuchtung der ersten Messung entspricht.

Zwei kurze Echos aus beiden Messungen lassen auf eine weitgehend ebene Oberfläche schließen, während bei zwei längeren Echos ein Schüttkegel oder Abzugstrichter anzunehmen ist.

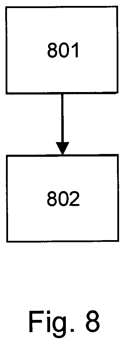

Fig. 8 zeigt ein Flussdiagramm eines Verfahrens zum Bestimmen eines Füllstands eines Füllguts in einem Behälter, bei dem in Schritt 801 ein von der Füllgutoberfläche reflektiertes Empfangssignal empfangen und in Schritt 802 Informationen über eine Topografie der Füllgutoberfläche auf Basis einer Form des Empfangssignals ermittelt werden.

**Patentansprüche**

1. Laufzeit-Füllstandsensor zur Messung eines Füllstands eines Füllguts in einem Behälter, das Füllstandmessgerät (2) aufweisend:

   einen Empfänger (7) zum Empfang eines von der Füllgutoberfläche reflektierten Sendesignals, **dadurch gekennzeichnet, dass** der Laufzeit-Füllstandsensor eine Recheneinheit (8) zum Bestimmen, ob ein Schüttkegel, ein Abzugstrichter oder eine annähernd ebene Füllgutoberfläche vorliegt, aufweist;

wobei die Recheneinheit (8) so ausgestaltet ist, dass eine Entscheidung, ob ein Abzugstrichter oder ein Schüttkegel vorliegt, aus der Form einer einzelnen Echokurve des Empfangssignals abgeleitet wird, indem die Lage des Maximums innerhalb des Echobandes der Schüttgutoberfläche verglichen wird mit der Lage des Echoanfangs A und des Echoendes E des Echobandes.

2. Laufzeit-Füllstandsensor nach Anspruch 1, wobei der Laufzeit-Füllstandsensor ein Füllstandradar ist, der die Füllstandmessung auf Basis eines Pulsradarverfahrens durchführt; wobei die Recheneinheit (8) zum Ermitteln von Informationen über die Topografie der Füllgutoberfläche auf Basis einer Hüllkurve des Empfangssignals ausgeführt ist.

3. Laufzeit-Füllstandsensor nach einem der vorhergehenden Ansprüche, wobei der Laufzeit-Füllstandsensor ein Füllstandradar ist, der die Füllstandmessung auf Basis eines FMCW-Prinzips durchführt; wobei die Recheneinheit (8) zum Ermitteln von Informationen über die Topografie der Füllgutoberfläche auf Basis eines Amplitudenprofils des Empfangssignals ausgeführt ist.

4. Laufzeit-Füllstandsensor nach Anspruch 1, wobei der Laufzeit-Füllstandsensor ein Ultraschall-Füllstandsensor ist; wobei die Recheneinheit (8) zum Ermitteln von Informationen über die Topografie der Füllgutoberfläche auf Basis einer Hüllkurve des Empfangssignals ausgeführt ist.

5. Laufzeit-Füllstandsensor nach einem der vorhergehenden Ansprüche, wobei die Recheneinheit (8) zum Ermitteln einer Höhe des Schüttkegels oder des Abzugstrichters auf Basis eine Länge des Echobandes ausgeführt ist.

6. Laufzeit-Füllstandsensor nach einem der vorhergehenden Ansprüche, wobei die Recheneinheit (8) zum Ermitteln von Informationen über eine Topografie der Füllgutoberfläche zusätzlich Informationen über die Messumgebung nutzt.

7. Laufzeit-Füllstandsensor nach Anspruch 6, weiterhin aufweisend:

eine Speichereinheit (9, 10) zum Speichern der zusätzlichen Informationen nach deren manueller Eingabe durch einen Benutzer.

8. Laufzeit-Füllstandsensor nach einem der vorhergehenden Ansprüche,

wobei die Recheneinheit (8) zum Ermitteln einer Höhe des Schüttkegels oder des Abzugstrichters auf Basis mehrerer, zu verschiedenen Zeitpunkten empfangener, aber ansonsten korrespondierender Echokurven ausgeführt ist.

9. Laufzeit-Füllstandsensor nach einem der vorhergehenden Ansprüche, wobei die Recheneinheit (8) zum Ermitteln von Informationen über die Topografie der Füllgutoberfläche auf Basis mehrerer, zu verschiedenen Zeitpunkten empfangener, aber ansonsten korrespondierender Echokurven der Füllgutoberfläche ausgeführt ist; wobei die mit den Echokurven korrespondierenden Sendesignale mit jeweils unterschiedlichen Sensorparametern erzeugt sind.

10. Laufzeit-Füllstandsensor nach Anspruch 9, wobei es sich bei den unterschiedlichen Sensorparametern um die Frequenzen der abgestrahlten Sendesignale oder die Polarisationen der abgestrahlten Sendesignale handelt.

11. Laufzeit-Füllstandsensor nach Anspruch 9, wobei die mit den Echokurven korrespondierenden Sendesignale mit unterschiedlichen Antennen erzeugt sind.

12. Verfahren zum Bestimmen eines Füllstands eines Füllguts in einem Behälter, das Verfahren aufweisend die Schritte:

Empfang eines von der Füllgutoberfläche reflektierten Sendesignals, **dadurch gekennzeichnet, dass** das Verfahren den weiteren Schritt aufweist:

Bestimmen, ob ein Schüttkegel, ein Abzugstrichter oder eine annähernd ebene Füllgutoberfläche vorliegt; wobei die Entscheidung, ob ein Abzugstrichter oder ein Schüttkegel vorliegt, aus der Form einer einzelnen Echokurve des Empfangssignals abgeleitet wird, indem die Lage des Maximums innerhalb des Echobandes der Schüttgutoberfläche verglichen wird mit der Lage des Echoanfangs A und des Echoendes E des Echobandes.

13. Programmelement zum Bestimmen eines Füllstands eines Füllguts in einem Behälter, das, wenn es auf einem Prozessor (11) ausgeführt wird, den Prozessor anleitet, die folgenden Schritte durchzuführen:

Empfang eines von der Füllgutoberfläche reflektierten Sendesignals; Bestimmen, ob ein Schüttkegel, ein Abzugstrichter oder eine annähernd ebene Füllgutoberfläche vorliegt;

wobei die Entscheidung, ob ein Abzugstrichter oder ein Schüttkegel vorliegt, aus der Form einer einzelnen Echokurve des Empfangssignals abgeleitet wird, indem die Lage des Maximums innerhalb des Echobandes der Schüttgutoberfläche verglichen wird mit der Lage des Echoanfangs A und des Echoendes E des Echobandes.

14. Computerlesbares Medium zum Bestimmen eines Füllstands eines Füllguts in einem Behälter, auf dem ein Programmelement gespeichert ist, das, wenn es auf einem Prozessor (11) ausgeführt wird, den Prozessor anleitet, die folgenden Schritte durchzuführen:

Empfang eines von der Füllgutoberfläche reflektierten Sendesignals;

Bestimmen, ob ein Schüttkegel, ein Abzugstrichter oder eine annähernd ebene Füllgutoberfläche vorliegt;

wobei die Entscheidung, ob ein Abzugstrichter oder ein Schüttkegel vorliegt, aus der Form einer einzelnen Echokurve des Empfangssignals abgeleitet wird, indem die Lage des Maximums innerhalb des Echobandes der Schüttgutoberfläche verglichen wird mit der Lage des Echoanfangs A und des Echoendes E des Echobandes.

**Claims**

1. A transit-time fill-level sensor for measuring the fill level of a filling material in a container, with the fill-level sensor (2) comprising:

a receiver (7) for receiving a receiving signal reflected by the filling material surface, **characterized in that** the transit-time fill-level measuring device comprises a computing unit (8) for determining whether a charge cone, a discharge funnel or an approximately even surface is present; wherein the computing unit (8) is configured such that a decision, whether a charge cone or a discharge funnel is present, is derived from the shape of a single echo curve of the receiving signal, by comparing the position of the maximum of the echo band of the bulk material surface with the positions of the echo beginning A and the echo end E of the echo band.

2. The transit-time fill-level sensor according to claim 1, wherein the transit-time fill-level sensor is a fill level radar that carries out fill level measuring on the basis of a pulse radar method; wherein the computing unit (8) is designed to determine the information about the topography of the filling material surface on the basis of an envelope curve of the receiving signal.

3. The transit-time fill-level sensor according to claim 1, wherein the transit-time fill-level sensor is a fill level radar that carries out fill level measuring on the basis of an FMCW principle; wherein the computing unit (8) determines the information concerning the topography of the filling material surface on the basis of an amplitude profile of the receiving signal.

4. The transit-time fill-level sensor according to claim 1, wherein the transit-time fill-level sensor is an ultrasound fill level sensor; wherein the computing unit (8) is designed to determine the information concerning the topography of the filling material surface on the basis of an envelope of the receiving signal.

5. The transit-time fill-level sensor according to one of the previous claims, wherein the computing unit (8) is configured for determining a height of a charge cone or the discharge funnel on the basis of the length of the echo band.

6. The transit-time fill-level sensor according to one of the previous claims, wherein the computing unit (8), in order to determine information concerning the topography of the filling material surface, additionally utilises information about the measuring environment.

7. The transit-time fill-level sensor according to claim 6, further comprising:

a memory unit (9, 10) for storing the additional information following its manual input by a user.

8. The transit-time fill-level sensor according to one of the previous claims, wherein the computing unit (8) is configured for determining a height of the charge cone or the discharge funnel on the basis of several echo curves that have been received at various points in time but that otherwise correspond.

9. The transit-time fill-level sensor according to one of the previous claims, wherein the computing unit (8) is configured for determining information about the topography of the filling material surface on the basis of several echo curves of the filling material surface that have been received at various points in time but that otherwise correspond; wherein transmission signals that correspond to the echo curves in each case have been generated with different sensor parameters.

**10.** The transit-time fill-level sensor according to claim 9, wherein the different sensor parameters are the frequencies of the emitted transmission signals or the polarisations of the emitted transmission signals.

**11.** The transit-time fill-level sensor according to claim 9, wherein the transmission signals that correspond to the echo curves have been generated with the use of different antennae.

**12.** A method for determining the fill level of a filling material in a container, with the method comprising the steps of:

receiving a receiving signal reflected by the filling material surface, **characterized in** the following steps:

deciding, whether a charge cone, a discharge funnel or an approximately even filling material surface is present; wherein the decision, whether a charge cone or a discharge funnel is present, is derived from the shape of a single echo curve of the receiving signal, by comparing the position of the maximum of the echo band of the bulk material surface with the positions of the echo beginning A and the echo end E of the echo band.

**13.** A program element for determining the fill level of a filling material in a container, which program element, when it is executed on a processor (11), instructs the processor to carry out the following steps:

receiving a receiving signal reflected by the filling material surface, **characterized in** the following steps:

deciding, whether a charge cone, a discharge funnel or an approximately even filling material surface is present; wherein the decision, whether a charge cone or a discharge funnel is present, is derived from the shape of a single echo curve of the receiving signal, by comparing the position of the maximum of the echo band of the bulk material surface with the positions of the echo beginning A and the echo end E of the echo band.

**14.** A computer-readable medium for determining the fill level of a filling material in a container, on which medium a program element is stored, which, when it is executed on a processor (11), instructs the processor to carry out the following steps:

receiving a receiving signal reflected by the filling material surface, **characterized in** the following steps:

deciding, whether a charge cone, a discharge funnel or an approximately even filling material surface is present; wherein the decision, whether a charge cone or a discharge funnel is present, is derived from the shape of a single echo curve of the receiving signal, by comparing the position of the maximum of the echo band of the bulk material surface with the positions of the echo beginning A and the echo end E of the echo band.

**Revendications**

**1.** Capteur de niveau par mesure du temps de parcours pour la mesure d'un niveau d'une charge dans un récipient, l'appareil de mesure de niveau (2) comprenant :

un récepteur (7) pour la réception d'un signal d'émission réfléchi par la surface de la charge, **caractérisé en ce que** le capteur de niveau par mesure du temps de parcours présente une unité de calcul (8) pour déterminer la présence éventuelle d'un cône de déversement, d'un entonnoir de décharge ou d'une surface de charge approximativement plane ; l'unité de calcul (8) étant configurée de sorte qu'une décision de la présence éventuelle d'un entonnoir de décharge ou d'un cône de déversement est déduite de la forme d'une courbe écho individuelle du signal de réception, la position du maximum à l'intérieur de l'écho bande de la surface de la charge étant comparée à la position du début d'écho A et de la fin d'écho E de l'écho bande.

**2.** Capteur de niveau par mesure du temps de parcours selon la revendication 1, le capteur de niveau par mesure du temps de parcours étant un radar de niveau, qui réalise la mesure de niveau sur la base d'un procédé de radar pulsé ; l'unité de calcul (8) étant réalisée pour la détermination d'informations sur la topographie de la surface de la charge sur la base d'une courbe d'enveloppe du signal de réception.

**3.** Capteur de niveau par mesure du temps de parcours selon l'une des revendications précédentes, le capteur de niveau par mesure du temps de parcours étant un radar de niveau, qui réalise la mesure de niveau sur la base d'un principe FMCW ; l'unité de calcul (8) étant réalisée pour la détermination d'informations sur la topographie de la surface de la charge sur la base d'un profil d'amplitude du signal de réception.

4. Capteur de niveau par mesure du temps de parcours selon la revendication 1,
le capteur de niveau par mesure du temps de parcours étant un capteur de niveau ultrasonique ;
l'unité de calcul (8) étant réalisée pour la détermination d'informations sur la topographie de la surface de la charge sur la base d'une courbe d'enveloppe du signal de réception.

5. Capteur de niveau par mesure du temps de parcours selon l'une des revendications précédentes,
l'unité de calcul (8) étant réalisée pour la détermination d'une hauteur du cône de déversement ou de l'entonnoir de décharge sur la base d'une longueur de l'écho bande.

6. Capteur de niveau par mesure du temps de parcours selon l'une des revendications précédentes,
l'unité de calcul (8), pour la détermination d'informations sur la topographie de la surface de la charge, utilisant en supplément des informations sur l'environnement de mesure.

7. Capteur de niveau par mesure du temps de parcours selon la revendication 6, comprenant en outre :

une unité de mémoire (9, 10) pour la mémorisation d'informations supplémentaires après leur introduction manuelle par un utilisateur.

8. Capteur de niveau par mesure du temps de parcours selon l'une des revendications précédentes,
l'unité de calcul (8) étant réalisée pour la détermination d'une hauteur du cône de déversement ou de l'entonnoir de décharge sur la base de plusieurs courbes écho reçues à différents instants, mais sinon en correspondance.

9. Capteur de niveau par mesure du temps de parcours selon l'une des revendications précédentes,
l'unité de calcul (8) étant réalisée pour la détermination d'informations sur la topographie de la surface de la charge sur la base de plusieurs courbes écho de la surface de la charge, reçues à différents instants, mais sinon en correspondance ;
les signaux d'émission correspondant aux courbes écho étant générés avec des paramètres de capteur respectivement différents.

10. Capteur de niveau par mesure du temps de parcours selon la revendication 9,
les paramètres de capteur différents étant les fréquences des signaux d'émission émis ou les polarisations des signaux d'émission émis.

11. Capteur de niveau par mesure du temps de parcours selon la revendication 9,
les signaux d'émission correspondant aux courbes écho étant générés par des antennes différentes.

12. Procédé de détermination d'un niveau d'une charge dans un récipient, le procédé comprenant les étapes :

réception d'un signal d'émission réfléchi par la surface de la charge, **caractérisé en ce que** le procédé comprend l'étape ultérieure :

détermination de la présence éventuelle d'un cône de déversement, d'un entonnoir de décharge ou d'une surface de la charge approximativement plane ;
la décision de la présence éventuelle d'un entonnoir de décharge ou d'un cône de déversement étant déduite de la forme d'une courbe écho individuelle du signal de réception, la position du maximum à l'intérieur de l'écho bande de la surface de la charge étant comparée à la position du début d'écho A et de la fin d'écho E de l'écho bande.

13. Elément de programme pour la détermination du niveau d'une charge dans un récipient, lequel élément, lorsqu'il est réalisé sur un processeur (11), donne l'ordre à ce dernier de mettre en oeuvre les étapes suivantes :

réception d'un signal d'émission réfléchi par la surface de la charge ;
détermination de la présence éventuelle d'un cône de déversement, d'un entonnoir de décharge ou d'une surface de la charge approximativement plane ;
la décision de la présence éventuelle d'un entonnoir de décharge ou d'un cône de déversement étant déduite de la forme d'une courbe écho individuelle du signal de réception, la position du maximum à l'intérieur de l'écho bande de la surface de la charge étant comparée à la position du début d'écho A et de la fin d'écho E de l'écho bande.

14. Support lisible par ordinateur pour la détermination d'un niveau d'une charge dans un récipient, support sur lequel est mémorisé un élément de programme qui, lorsqu'il est réalisé sur un processeur (11), donne l'ordre à ce dernier de mettre en oeuvre les étapes suivantes :

réception d'un signal d'émission réfléchi par la surface de la charge ;
détermination de la présence éventuelle d'un cône de déversement, d'un entonnoir de décharge ou d'une surface de la charge approximativement plane ;
la décision de la présence éventuelle d'un entonnoir de décharge ou d'un cône de déversement étant déduite de la forme d'une courbe écho individuelle du signal de réception, la position du maximum à l'intérieur de l'écho bande de la surface de la charge étant comparée à la position du début d'écho A et de la fin d'écho E de l'écho bande.

EP 2 128 576 B1

Fig. 1

9  10      11

12

8

7        5

6

Fig. 2

15

Fig. 3

Fig. 4a

Fig. 4b

Fig. 4c

Fig. 5a

Fig. 5b

Fig. 5c

Fig. 6a

Fig. 6b

Fig. 6c

Fig. 7a

Fig. 7b

Fig. 7c

Fig. 7d

```
┌──────────┐
│          │
│   801    │
│          │
└────┬─────┘
     │
     ▼
┌──────────┐
│          │
│   802    │
│          │
└──────────┘
```

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005011686 A1
- DE 102005011778 A1
- WO 2006090394 A
- DE 102005063079 A1

**In der Beschreibung aufgeführte Nicht-Patentliteratur**

- Buch Radartechnik. Springer-Verlag, 1989
- **MERRILL SKOLNIK.** Jürgen Detlefsen und im Buch Radar Handbook. McGraw-Hill, 1990